# DEMANDE DE BREVET EUROPEEN

(11) **EP 0 592 256 A1**
(43) Date de publication de la demande: **13.04.1994**
(21) Numéro de dépôt: 93401847.4
(22) Date de dépôt: 19.07.1993
(51) Int. Cl.: C01B 33/26, C11D 3/12

(54) **Silico-aluminate de métal alcalin solide et amorphe**

(30) Priorité: 09.10.1992 FR 9212054
(71) Demandeur: RHONE-POULENC CHIMIE, 92408 Courbevoie Cédex (FR)
(72) Inventeur: Frouin, Laurent, F-94240 l'Haye les Roses (FR); Pennavaire, Maryse, F-93230 Romainville (FR)
(74) Mandataire: Seugnet, Jean Louis

(57) **Abrégé**

La présente invention concerne un silico-aluminate de métal alcalin solide et amorphe, caractérisé en ce qu'il possède la composition chimique molaire suivante:

x SiO2; y Al2O3; z M2O; w H2O,

dans laquelle M représente un métal alcalin, de préférence le sodium, x est compris entre 2 et 2,9, y est compris entre 0,8 et 1,2, de préférence est égal à 1, z est compris entre 0,8 et 1,8 et w est supérieur ou égal à 5, en ce qu'il présente une surface spécifique inférieure à 50 m2/g, un volume poreux d'au moins 1 cm3/g et une absorption d'huile d'au moins 170 ml pour 100 g de silico-aluminate.

Elle concerne également une composition détergente comprenant ce silico-aluminate.

Elle concerne enfin le procédé de préparation de ce silico-aluminate.

## Description

La présente invention concerne un silico-aluminate de métal alcalin amorphe et solide, ainsi que son procédé de préparation.

Elle concerne également, à titre d'application, une composition détergente comprenant ce silico-aluminate amorphe et solide.

Les silico-aluminates amorphes sont des produits connus depuis longtemps et sont notamment utilisés, dans le domaine de la détergence, en tant que sites d'absorption de certains composants, tels que les tensio-actifs, les azurants optiques et les parfums. Ceci permet de densifier les compositions détergentes, caractéristique particulièrement recherchée de nos jours. Cependant, ces silico-aluminates amorphes ne présentent, en général, pas un pouvoir échangeur de cations divalents et une cinétique d'échange de ces cations très élevés.

Les matières pouvant échanger des cations et leur utilisation, par exemple pour l'adoucissement de l'eau, sont bien connues en pratique. On peut ainsi citer les zéolites qui possèdent un pouvoir échangeur du calcium élevé, mais un pouvoir échangeur du magnésium trop faible. On peut également reprocher à ces produits de ne pas présenter une cinétique d'échange des cations suffisamment élevée.

Un but de l'invention est donc de proposer un silico-aluminate amorphe présentant un pouvoir d'absorption supérieur ou égal à celui des silico-aluminates amorphes connus, ainsi qu'une capacité et une cinétique d'échange du calcium et du magnésium améliorées.

La demanderesse a constaté que ce but et d'autres peuvent être atteints par la présente invention qui concerne en effet un silico-aluminate de métal alcalin amorphe et solide, caractérisé en ce qu'il possède la composition chimique molaire (I) suivante:

x SiO2; y Al2O3; z M2O; w H2O,

dans laquelle M représente un métal alcalin, de préférence le sodium, x est compris entre 2 et 2,9, de préférence entre 2 et 2,4. y est compris entre 0,8 et 1,2, de préférence est égal à 1, z est compris entre 0,8 et 1,8 et w est supérieur ou égal à 5, et en ce qu'il présente une surface spécifique inférieure à 50 m2/g, un volume poreux d'au moins 1 cm3/g et une absorption d'huile d'au moins 170 ml pour 100 g de silico-aluminate.

Selon sa teneur en eau, le silico-aluminate de la présente invention peut se présenter sous forme de poudres ou être présent en suspension dans l'eau (slurry).

L'analyse des silico-aluminates de la présente invention par microscopie électronique à transmission révèle un produit sous forme d'agglomérats constitués eux-mêmes de particules submicroniques.

Notons que le silico-aluminate de la présente invention présente des capacités d'échange de cations comparables à celles des zéolites dans le cas du calcium et supérieures dans le cas du magnésium, ceci est notamment dû à la composition chimique du silico-aluminate de la présente invention. Ainsi, sa capacité et sa cinétique d'échange s'améliorent lorsque la valeur de w augmente. On préfère donc un silicoaluminate selon l'invention de composition chimique (I) dans laquelle w est supérieur ou égal à 6. La limite supérieure de w est déterminée par la forme que l'on veut donner au silico-aluminate amorphe de la présente invention. Ainsi, dans le cas des poudres, par exemple, il est à la portée de l'homme du métier de déterminer la limite supérieure de w.

Plus particulièrement, le silico-aluminate selon l'invention présente une capacité d'échange de calcium d'au moins 250 mg de carbonate de calcium par gramme de silico-aluminate anhydre, une cinétique d'échange de calcium d'au moins 200 mg de carbonate de calcium par gramme de silico-aluminate anhydre après une minute de contact, une capacité d'échange de magnésium d'au moins 120 mg de carbonate de calcium par gramme de silico-aluminate anhydre et/ou une cinétique d'échange de magnésium d'au moins 60 mg de carbonate de calcium par gramme de silico-aluminate anhydre après une minute de contact. De préférence, le silico-aluminate selon l'invention présente une capacité d'échange de calcium d'au moins 270 mg de carbonate de calcium par gramme de silico-aluminate anhydre, une cinétique d'échange de calcium d'au moins 220 mg de carbonate de calcium par gramme de silico-aluminate anhydre après une minute de contact, une capacité d'échange de magnésium d'au moins 190 mg de carbonate de calcium par gramme de silico-aluminate anhydre et/ou une cinétique d'échange de magnésium d'au moins 65 mg de carbonate de calcium par gramme de silico-aluminate anhydre après une minute de contact.

Le silico-aluminate de la présente invention présente, plus particulièrement, une surface spécifique comprise entre 10 et 20 m2/g et/ou un volume poreux d'au moins 2 cm3/g, de préférence d'au moins 4 cm3/g.

Le silico-aluminate de la présente invention présente une absorption d'huile d'au moins 170 ml/100g, et plus particulièrement d'au moins 190 ml/100 g. Cette valeur d'absorption est calculée selon la norme NF-T45-121 (prise du dibutylphtalate).

Cette caractéristique est particulièrement intéressante pour la mise au point de lessives compactes comprenant notamment un taux élevé de tensio-actifs.

La présente invention a également pour objet une composition détergente comprenant notamment en tant qu'agent absorbant et/ou capteur de cations divalents du silico-aluminate de métal alcalin solide et amorphe tel que décrit ci-dessus. La quantité de silico-aluminate selon l'invention est généralement comprise entre 4 et 40% en poids de la composition détergente.

Enfin, la présente invention concerne un procédé de préparation du silicoaluminate de métal alcalin solide et amorphe décrit ci-dessus, caractérisé en ce qu'il comprend les étapes suivantes : (1) mélange d'une solution aqueuse de silicate de métal alcalin de rapport molaire SiO2/M2O supérieur ou égal à 2 et d'extrait sec compris entre 30 et 50% en poids avec une solution aqueuse d'aluminate de métal alcalin diluée par addition d'hydroxyde de métal alcalin et d'eau, de telle sorte que la composition molaire du mélange avant gélification soit la suivante:

2-2,9 SiO2; 0 8-1,2 Al2O3; 3-10 M2O; 60-200 H2O;

dans laquelle M représente un métal alcalin, (2) mûrissement éventuel du gel formé à l'étape (1), (3) filtration ou centrifugation, (4) lavage, (5) séchage de la suspension obtenue après l'étape (4) et (6) broyage éventuel du produit séché.

Dans l'ensemble de ce procédé, le métal alcalin préféré est le sodium.

Au cours de l'étape (1), une simple agitation, par pale rotative notamment, suffit à réaliser un mélange homogène du fait du retard à la gélification, ce retard étant dû à la dépolymérisation du silicate de métal alcalin choisi.

Le mélange avant gélification a préférentiellement la composition molaire suivante:

2 SiO2; 0.8-1,2 Al2O3; 4-8 M2O; 60-200 H2O.

De façon encore plus préférée, le mélange avant gélification a la composition molaire suivante:

2 SiO2; 1 Al2O3; 6 M2O; 120 H2O.

Le mélange des réactifs peut être réalisé de différentes manières. On préfère, cependant, soit introduire les deux solutions aqueuses en parallèle, soit introduire la solution aqueuse de silicate de métal alcalin dans la solution aqueuse diluée d'aluminate de métal alcalin. Ce mode opératoire préféré permet d'obtenir une gélification plus homogène.

Le gel formé lors de l'étape (1) peut être ensuite maintenu sous agitation, ceci correspond à l'étape éventuelle de mûrissement. La réalisation de cette étape (2), ainsi que sa durée dépendent généralement de l'ensemble du dispositif utilisé pour mettre en oeuvre le procédé de l'invention.

On opère généralement à une température comprise entre 15 et 50°C, de préférence à une température comprise entre 15°C et 30°C.

A la suite de la gélification et de l'éventuel mûrissement, avant ou après élimination des eaux-mères (étape (3)). on peut envisager de mettre en oeuvre une carbonatation du produit obtenu. Cette carbonatation présente l'avantage de pouvoir éventuellement éliminer ou du moins alléger certaines étapes, telles que l'étape de lavage (diminution du nombre de lavages) ou l'étape de filtration ou de centrifugation. Cette carbonatation est réalisée par addition de dioxyde de carbone qui réagit avec l'hydroxyde de métal alcalin libre. Le produit ainsi obtenu se présente sous une forme de poudre non pulvérulente constituée essentiellement du silico-aluminate, tel que décrit dans la présente invention, et de carbonate de métal alcalin monohydraté. Ce produit carbonaté peut également présenter des avantages non négligeables en détergence en diminuant le pH et en apportant des carbonates.

Après gélification et éventuel mûrissement, le produit obtenu est filtré ou centrifugé afin de retirer les eaux-mères, lavé pour éliminer notamment l'excès d'hydroxyde de métal alcalin; ceci est réalisé par tout moyen connu en soi. De manière pratique, la filtration est réalisée au moyen d'un filtre presse et le lavage est réalisé au moyen d'eau déminéralisée.

Il peut être également avantageux d'ajouter des additifs dans la suspension (slurry) avant l'étape de séchage ou éventuellement dans le mélange de l'étape (1). Par additifs, on entend des polymères hydrosolubles classiquement utilisés en détergence qui ont notamment un effet anti-redéposition, tels que les copolymères d'acide acrylique et d'anhydride maléïque ou les polyacrylates.

Bien entendu, le séchage est mis en oeuvre de manière contrôlée de façon à obtenir un silico-aluminate de composition molaire (I). Cette étape de séchage peut être mise en oeuvre par tout moyen connu en soi, tel que notamment le séchage en couche mince, le séchage par lyophilisation, par micro-ondes ou par lit fluidisé. On préfère, cependant, le séchage par atomisation dont la mise en oeuvre industrielle est plus aisée.

L'étape de broyage peut être réalisée par tout moyen connu en soi. Elle peut notamment être réalisée par un broyeur à boulets, à marteaux ou à jets d'air.

Ainsi, le diamètre moyen des particules du silico-alulminate amorphe obtenu par le procédé de la présente invention est compris entre 1 et 100 µm, de préférence entre 5 et 20 µm.

Dans ce qui suit et ce qui précède, la mesure de la capacité d'échange de calcium est basée sur le dosage complexométrique en retour du calcium libre par l'EDTA après élimination du silico-aluminate échangé et le résultat est exprimé en mg de carbonate de calcium fixés par gramme de silico-aluminate anhydre à un temps t = 15 min, le silico- aluminate amorphe à tester étant introduit à une concentration de 1 g/l en anhydre au temps t = 0 dans une solution de concentration en calcium connue (solution de CaCI2 à 0,005 M) à 25°C. La mesure de la capacité d'échange de magnésium est basée sur une méthode directement transposée de la précédente.

Dans ce qui suit et ce qui précède, la mesure de la cinétique d'échange du calcium est basée sur le suivi de l'évolution de la concentration en calcium en fonction du temps en présence de silico-aluminate à tester. L'électrode utilisée est l'électrode "Orion", modèie 9320. Au temps t=0, le silico-aluminate est introduit à une concentration de 1 g/l en anhydre dans une solution dont la concentration en calcium est de 3,0.10⁻³M (tampon pH=10,2) à une température de 25°C; le potentiel est noté après une minute (les concentrations sont alors calculées à l'aide d'une courbe d'étalonnage). Le résultat est donc exprimé en mg de carbonate de calcium fixés par gramme de silico-aluminate anhydre après une minute de contact. La mesure de la cinétique d'échange de magnésium est basée sur une méthode directement transposée de la précédente.

Afin d'illustrer l'invention, sans toutefois en limiter sa portée, des exemples vont maintenant être donnés.

Sauf mentions contraires, les pourcentages sont en poids.

### EXEMPLE 1

Dans cet exemple, on utilise:

Une solution de silicate de sodium de rapport molaire SiO2/Na2O égal à 2, de densité de 1,55 et d'extrait sec de 45,7%,

Une solution d'aluminate de sodium préparée par attaque à la soude en pastilles (à 105°C, pendant 2 heures) de l'hydrate d'alumine commercialisé par Prolabo, pour obtenir une solution mère contenant environ 20% de Al2O3 et 18 à 20% de Na2O, puis par dilution de cette solution mère par de la soude et de l'eau permutée. Ainsi, les teneurs en Al2O3 et en Na2O sont respectivement de 4,1 et de 12,6 %.

Une quantité adéquate de la solution de silicate de sodium est versée en moins de deux secondes dans la solution d'aluminate de sodium réactionnel placée, à température ambiante, dans un réacteur agité au moyen d'une ancre entrainée à vitesse constante. La composition molaire du milieu réactionnel avant gélification est alors la suivante:

2 SiO2; 1Al2O3; 6 Na2O; 120 H2O.

Le temps de gélification requiert une à deux minutes, ce qui permet le mélange homogène des deux constituants. Le gel formé est maintenu sous agitation, toujours à température ambiante, pendant 30 minutes. Après cette étape de mûrissement, la séparation des eaux-mères s'effectue sur filtre type presse et est suivie de trois lavages à l'eau permutée. Puis le gâteau obtenu est remis en suspension dans de l'eau permutée à raison de 10% en solide.

On procède alors à l'atomisation de cette suspension pour obtenir une poudre de silico-aluminate amorphe.

Ce silico-aluminate amorphe a les caractéristiques suivantes:
- Densité tassée:: 0,21 g/ml
- Diamètre moyen:: 12,7 µm
- Surface (BET azote):: 17 m2/g
- Volume poreux:: 4,2 cm3/g
- Pouvoir absorbant:: 200 ml/100g
- Extrait sec:: 71%
- pH (5% sol. aqueuse):: 11,1
- Capacité calcium:: 280 mg CaCO3/g d'anhydre
- Cinétique calcium:: 218mg CaCO3/g d'anhydre à 1 minute
- Capacité magnésium:: 195 mg CaCO3/g d'anhydre
- Cinétique magnésium:: 67 mg CaCO3/g d'anhydre à 1 minute et sa composition molaire est la suivante:
2,38 SiO2; 1 Al2O3; 1,07 Na2O; 7,1 H2O.

### EXEMPLES 2 A 4

On procède exactement comme dans l'exemple 1, la composition molaire du mélange réactionnel est donc la même. les résultats obtenus montrent la reproductibilité du procédé. Le tableau ci-dessous rassemble les résultats obtenus.

| **Exemples** | **2** | **3** | **4** |
|---|---|---|---|
| Extrait sec (%) | 73,2 | 72,9 | 65,5 |
| Capacité calcium | 293 mg/g | 286 mg/g | 285 mg/g |
| Cinétique calcium | 208 mg/g à 1 min. | 220 mg/g à 1 min. | |
| Diamètre moyen | 11,1 µm | 9,0 µm | 13,7 µm |
| Volume poreux | 4,6 cm3/g | 2,3 cm3/g | |
| Pouvoir absorbant | 202 ml/100g | 180 ml/100g | 172 ml/100g |

Le silico-aluminate obtenu de l'exemple 4 a la composition chimique molaire suivante :

2,25 SiO2: 1 Al2O3: 0,94 Na2O; 8,65 H2O.

A titre de comparaison, les spécifications de Procter et Gamble pour la zéolite 4A sont les suivantes:
- Teneur en 4A:: 85%
- Diamètre moyen:: 2 à 5 µm
- Capacité calcium:: > 250 mg/g
- Cinétique calcium:: 150 mg/g à 1 min.

## Revendications

**1./** Silico-aluminate de métal alcalin amorphe et solide, caractérisé en ce qu'il possède la composition chimique molaire (I) suivante :
x SiO2; y Al2O3; z M2O; w H2O,
dans laquelle M représente un métal alcalin, de préférence le sodium, x est compris entre 2 et 2,9, de préférence entre 2 et 2,4, y est compris entre 0,8 et 1,2, de préférence est égal à 1, z est compris entre 0,8 et 1,8 et w est supérieur ou égal à 5, et en ce qu'il présente une surface spécifique inférieure à 50 m2/g, un volume poreux d'au moins 1 cm3/g et une absorption d'huile d'au moins 170 ml pour 100 g.

**2./** Silico-aluminate selon la revendication 1, caractérisé en ce qu'il présente une composition chimique (I) dans laquelle w est supérieur ou égal à 6.

**3./** Silico-aluminate selon l'une des revendications 1 ou 2, caractérisé en ce qu'il présente une capacité d'échange de calcium d'au moins 250 mg de carbonate de calcium par gramme de silico-aluminate anhydre, une cinétique d'échange de calcium d'au moins 200 mg de carbonate de calcium par gramme de silico-aluminate anhydre après une minute de contact, une capacité d'échange de magnésium d'au moins 120 mg de carbonate de calcium par gramme de silico-aluminate anhydre et/ou une cinétique d'échange de magnésium d'au moins 60 mg de carbonate de calcium par gramme de silico-aluminate anhydre après une minute de contact.

**4./** Silico-aluminate selon la revendication précédente, caractérisé en ce qu'il présente une capacité d'échange de calcium d'au moins 270 mg de carbonate de calcium par gramme de silico-aluminate anhydre, une cinétique d'échange de calcium d'au moins 220 mg de carbonate de calcium par gramme de silico-aluminate anhydre après une minute de contact, une capacité d'échange de magnésium d'au moins 190 mg de carbonate de calcium par gramme de silico-aluminate anhydre et/ou une cinétique d'échange de magnésium d'au moins 65 mg de carbonate de calcium par gramme de silico-aluminate anhydre après une minute de contact.

**5./** Silico-aluminate amorphe selon l'une quelconque des revendications précédentes, caractérisé en ce qu'il présente une surface spécifique comprise entre 10 et 20 m2/g et/ou un volume poreux d'au moins 2 cm3/g, de préférence d'au moins 4 cm3/g.

**6./** Silico-aluminate amorphe selon l'une quelconque des revendications précédentes, caractérisé en ce qu'il présente une absorption d'huile d'au moins 190 ml/100 g.

**7./** Composition détergente comprenant notamment en tant qu'agent absorbant et/ou capteur de cations divalents un silico-aluminate de métal alcalin solide et amorphe selon l'une quelconque des revendications précédentes.

**8./** Composition détergente selon la revendication précédente, caractérisée en ce que la quantité de silico-aluminate présente est comprise entre 4 et 40% en poids de la composition détergente.

**9./** Procédé de préparation du silico-aluminate de métal alcalin solide et amorphe selon l'une quelconque des revendications 1 à 6, caractérisé en ce qu'il comprend les étapes suivantes : (1) mélange d'une solution aqueuse de silicate de métal alcalin de rapport molaire SiO2/M2O supérieur ou égal à 2 et d'extrait sec compris entre 30 et 50% en poids avec une solution aqueuse d'aluminate de métal alcalin diluée par addition d'hydroxyde de métal alcalin et d'eau, de telle sorte que la composition molaire du mélange avant gélification soit la suivante:
2-2,9 SiO2: 0,8-1,2 Al2O3; 3-10 M2O; 60-200 H2O;
dans laquelle M représente un métal alcalin, (2) mûrissement éventuel du gel formé à l'étape (1), (3) filtration ou centrifugation, (4) lavage, (5) séchage de la suspension obtenue après l'étape (4) et (6) broyage éventuel du produit séché.

**10./** Procédé selon la revendication précédente, caractérisé en ce que le métal alcalin est le sodium.

**11./** Procédé selon l'une des revendications 9 et 10, caractérisé en ce que les étapes (1) et (2) sont mises en oeuvre sous agitation.

**12./** Procédé selon l'une quelconque des revendications 9 à 11, caractérisé en ce que le mélange avant gélification a la composition molaire suivante:
2 SiO2; 0,8-1,2 Al2O3; 4-8 M2O; 60-200 H2O.

**13./** Procédé selon la revendication précédente, caractérisé en ce que le mélange avant gélification a la composition molaire suivante:
2 SiO2; 1 Al2O3; 6 M2O; 120 H2O.

**14./** Procédé selon l'une quelconque des revendications 9 à 13, caractérisé en ce que l'étape (1) de mélange est mise en oeuvre soit en introduisant les deux solutions aqueuses en parallèle, soit en introduisant la solution aqueuse de silicate de métal alcalin dans la solution aqueuse diluée d'aluminate de métal alcalin.

**15./** Procédé selon l'une quelconque des revendications 9 à 14, caractérisé en ce que le procédé est mis en oeuvre à une température comprise entre 15 et 50°C, de préférence à une température comprise entre 15 et 30°C.

**16./** Procédé selon l'une quelconque des revendications 9 à 15, caractérisé en ce que à la suite de la gélification et de l'éventuel mûrissement, on met en oeuvre une carbonatation du produit obtenu.

**17./** Procédé selon l'une quelconque des revendications 9 à 16, caractérisé en ce que on ajoute des additifs dans la suspension avant l'étape (5) de séchage, ou éventuellement dans le mélange de l'étape (1).

**18/** Procédé selon l'une quelconque des revendications 9 à 17, caractérisé en ce que l'étape (5) de séchage est mise en oeuvre par atomisation.
